# EUROPÄISCHE PATENTSCHRIFT

(11) **EP 3 826 862 B1**
(45) Veröffentlichungstag und Bekanntmachung des Hinweises auf die Patenterteilung: **07.06.2023**
(21) Anmeldenummer: 19736654.5
(22) Anmeldetag: 02.07.2019
(51) Int. Cl.: B60B 17/00, B60B 33/00

(54) **SCHIENENRADSATZ UND FAHRWAGEN**
RAIL WHEEL SET AND CAR
ESSIEU MONTÉ SUR RAILS ET CHARIOT

(30) Priorität: 23.07.2018 DE 202018104230 U
(43) Veröffentlichungstag der Anmeldung: 02.06.2021
(73) Patentinhaber: LOSYCO GmbH, 33699 Bielefeld (DE)
(72) Erfinder: MÜNTER, Christoph, 32602 Vlotho-Exter (DE); GRANZ, Manuel, 33098 Paderborn (DE)
(74) Vertreter: Dantz, Jan Henning
(86) Internationale Anmeldenummer: PCT/EP2019/067720
(87) Internationale Veröffentlichungsnummer: WO 2020/020584

(56) Entgegenhaltungen:
- DE-A1- 3 816 249
- US-A- 1 936 701
- US-A- 4 943 101
- US-A- 5 068 943

## Beschreibung

Die vorliegende Erfindung betrifft einen Schienenradsatz für einen auf einer Schiene eines Schienensystems verfahrbaren Fahrwagen gemäß dem Oberbegriff des Anspruchs 1. Die Erfindung betrifft des Weiteren einen Fahrwagen.

Gattungsgemäße Schienenräder und mit derartigen Schienenrädern versehene Fahrwagen werden üblicherweise zur Beförderung von schweren Gegenständen in Fabrikhallen eingesetzt, wobei in dem Fußboden der Fabrikhalle ein Schienensystem mit beispielsweise Rundschienen verlegt ist, auf denen die Schienenräder reibungsarm abrollen können.

Um mit den auf diesem Schienensystem geführten Fahrwagen Fahrtrichtungswechsel durchführen zu können, sind unterschiedliche Ausführungen von Schienenrädern und Schienensystemen bekannt.

So ist es beispielsweise bekannt, an den Fahrwagen Kreuzfahrwerke anzubringen, die im Bereich eines im Schienensystem verlegten Kreuzungsstückes durch Anheben oder Absenken des jeweiligen Fahrwerkes einen Fahrtrichtungswechsel ermöglichen, was aufgrund der an jedem Fahrwagen anzubringenden beiden Fahrwerken sowie der Kreuzungsstücke im Schienensystem sehr kostenaufwändig ist.

Auch bekannt sind drehbare Radsätze im Fahrwagen in Verbindung mit drehbaren Schienenkreuzungsstücken, sogenannter Drehweichen, die im Hallenboden verlegt werden müssen und exakt an mindestens vier Stellen mit den darüber angeordneten Radsätzen in Position und Drehachse fluchten müssen.

Auch diese Variante ist mit einem hohen Einbauaufwand, insbesondere des Schienensystems durch die Bereitstellung rotierbarer Weichen sehr kostenaufwändig. Darüber hinaus neigen die rotierbaren Weichen zu Verschmutzung, da diese im Hallenboden der Fabrikhalle eingebaut sind.

Bekannt ist des Weiteren, drehbare Radsätze am Fahrwagen anzubringen und zur Durchführung eines Fahrtrichtungswechsels den Fahrwagen aus den Schienen auszuheben.

Nachteil dieser Variante ist die Höhenänderung des Fahrwagens zur Durchführung des Fahrtrichtungswechsels, was insbesondere bei schweren, auf dem Fahrwagen zu befördernden Bauteilen ebenfalls nur sehr aufwändig durchzuführen ist.

Bekannt ist außerdem, im Hallenboden als Teil des Schienensystems eine sogenannte Drehscheibe einzubauen, auf die der Fahrwagen auffährt und auf der Drehscheibe aufstehend mit dieser zusammen rotiert wird, um anschließend in einer anderen Fahrtrichtung wieder von der Drehscheibe herunterzufahren.

Nachteilig an den aus dem Stand der Technik bekannten Fahrwagen sowie Schienenrädern ist darüber hinaus, dass die einteiligen Schienenräder im Kontaktbereich zur Schiene insbesondere im Fall von Rundschienen mit konkav ausgebildeten Schienenabrollflächen unter Belastung im Bereich einer sogenannten Druckellipse beidseits einer Mitte der Räder an der Schiene anliegen, was insbesondere bei Kurvenfahrten mit einer vergrößerten Reibung der Schienenabrollflächen und der Laufflächen der Schienenräder einhergeht.

Aus der US 4 943 101 A ist ein Radsatz für einen auf einer Schiene und einem Hallenboden verfahrbaren Kamerawagen bekannt, wobei die Räder des Radsatzes eine massive Schienenabrollfläche und daneben eine aus einem Luftreifen bestehende Bodenabrollfläche aufweisen. Insbesondere für schwere Lasten sind solche Luftreifen allerdings nicht geeignet oder führen zumindest zu sehr hohen Reibungswiderständen.

Aufgabe der vorliegenden Erfindung ist es, einen Schienenradsatz für einen auf einer Schiene eines Schienensystems verfahrbaren Fahrwagen sowie einen Fahrwagen bereitzustellen, mit dem die oben genannten Nachteile beseitigt werden.

Diese Aufgabe wird durch einen Schienenradsatz für einen auf einer Schiene eines Schienensystems verfahrbaren Fahrwagen mit den Merkmalen des Anspruchs 1 gelöst.

Die Aufgabe wird des Weiteren durch einen Fahrwagen mit den Merkmalen des Anspruchs 11 gelöst.

Der erfindungsgemäße Schienenradsatz weist eine an die Kontur einer Lauffläche der Schiene angepasst geformte Schienenabrollfläche und ein Lagergehäuse mit einer Radaufhängung zur Verbindung des Schienenradsatzes mit dem Fahrwagen auf.

Der Schienenradsatz weist desweiteren zwei drehbar am Lagergehäuse gelagerte Laufräder auf, mit einer jeweiligen Schienenabrollfläche und einer jeweiligen Bodenabrollfläche, wobei die Laufräder unabhängig voneinander an der Lauffläche der Schiene oder auf einem Boden abrollbar sind. Die Bodenabrollflächen des jeweiligen Laufrads sind dabei an einem Rand der Schienenabrollflächen angeformt.

Die Ausbildung eines Schienenradsatzes mit zwei drehbar am Lagergehäuse gelagerten Laufrädern ermöglicht in einfacher Weise ein reibungsärmeres Ablaufen an Kurvenstrecken einer Schiene, da das kurveninnere Laufrad nunmehr der abzufahrenden Strecke entsprechend langsamer laufen kann als das kurvenäußere Laufrad.

Die Anformung sowohl einer Schienenabrollfläche als auch einer Bodenabrollfläche ermöglicht den Einsatz eines solchen Schienenradsatzes auf einem Schienensystem, bei dem im Kreuzungsbereich zweier Schienenstränge die Schiene weggelassen ist und der Schienenradsatz damit auf einer ebenen Bodenfläche steht und auf den Bodenabrollflächen weiterrollend über diesen ebenen Boden weiter abrollen kann.

Dies ermöglicht eine Drehung eines Fahrwagens oder der im Fahrwagen integrierten Schienenradsätze um seine/ihre jeweilige senkrechte Mittelachse, ohne zusätzliche teure Schienenkreuzungsstücke wie anhebbare und/oder drehbare Weichen oder dergleichen im Boden der Fabrikhalle verlegen zu müssen oder im Fahrwagen entsprechende Hubmechanismen integrieren zu müssen.

Vorteilhafte Ausführungsvarianten der Erfindung sind Gegenstand der Unteransprüche.

Gemäß einer vorteilhaften Ausführungsvariante der Erfindung sind die Laufräder winklig zueinander geneigt ausgerichtet am Lagergehäuse angeordnet.

Dadurch ist ermöglicht, das Laufverhalten der Laufräder hinsichtlich eines verringerten Differenzialschlupfes zu verbessern.

Besonders bevorzugt sind die Laufräder unter einem Winkel von 40° bis 80°, insbesondere unter einem Winkel von 60° winklig zueinander geneigt ausgerichtet am Lagergehäuse angeordnet.

Gemäß einer alternativen Ausführungsvariante sind die Laufräder parallel zueinander ausgerichtet.

Gemäß einer weiteren Ausführungsvariante sind die Schienenabrollflächen im Querschnitt durch einen Durchmesser des jeweiligen Laufrads betrachtet als Kreisabschnitt geformt, was eine optimale Form in Verbindung mit einer Rundschiene darstellt.

Gemäß einer weiteren Ausführungsvariante beträgt ein von den beiden Schienenabrollflächen der Laufrollen umfasster Umgriffswinkel im Querschnitt durch einen Durchmesser des jeweiligen Laufrads betrachtet weniger als 180° oder genau 180°.

Dies bedeutet, dass die Laufrollen auf die jeweilige Schiene aufsetzbar und ohne weiteres senkrecht zur Längsrichtung der Schiene wieder abnehmbar sind.

Nach einer alternativen Ausführungsvariante beträgt dieser Umgriffswinkel mehr als 180°, so dass der Schienenradsatz nach Anbringung an der Schiene verliersicher an der Schiene befestigt ist.

Gemäß einer weiteren bevorzugten Ausführungsvariante ist die Bodenabrollfläche im Querschnitt durch einen Durchmesser des jeweiligen Laufrads betrachtet als geradlinige Bodenabrollfläche ausgebildet.

Gemäß einer weiteren vorteilhaften Ausführungsvariante des Schienenradsatzes ist an dem Lagergehäuse ein Teller zur Verbindung mit dem Fahrwagen angeordnet.

Dieser Teller ist besonders bevorzugt rotierbar am Lagergehäuse befestigt.

Der erfindungsgemäße Fahrwagen zur Beförderung von Gegenständen auf einem Schienensystem mit einem Fahrgestell und an dem Fahrgestell befestigten Schienenradsätzen zeichnet sich durch wie oben beschriebene Schienenradsätze aus.

Nachfolgend werden Ausführungsbeispiele der Erfindung anhand der beiliegenden Zeichnungen näher erläutert. Es zeigen:
- Fig. 1: eine schematische perspektivische Darstellung einer auf eine Schiene aufgesetzten Ausführungsvariante eines Schienenradsatzes,
- Fig. 2: eine Schnittansicht durch den in Fig. 1 gezeigten Schienenradsatz und der Schiene,
- Fig. 3: eine schematische perspektivische Darstellung eines Ausschnitts eines Schienensystems mit einer Drehlauffläche,
- Fig. 4: eine perspektivische Darstellung eines auf einem Kreuzungspunkt eines Schienensystems positionierten Schienenradsatzes,
- Fig. 5 und 6: unterschiedliche perspektivische Darstellungen eines Fahrwagens mit daran angeordneten Schienenradsätzen.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Schienenradsatzes, der Schiene, des Fahrwagens, des Lagergehäuses, der Laufräder und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

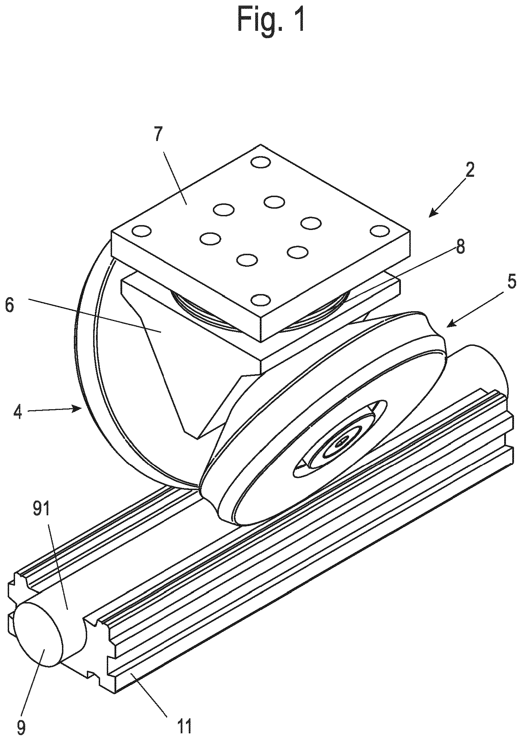

In den Figuren 1-4 und 6 ist mit dem Bezugszeichen 2 insgesamt eine Ausführungsvariante eines Schienenradsatzes für einen auf einer Schiene 9 eines Schienensystems 12 verfahrbaren Fahrwagen 1 bezeichnet.

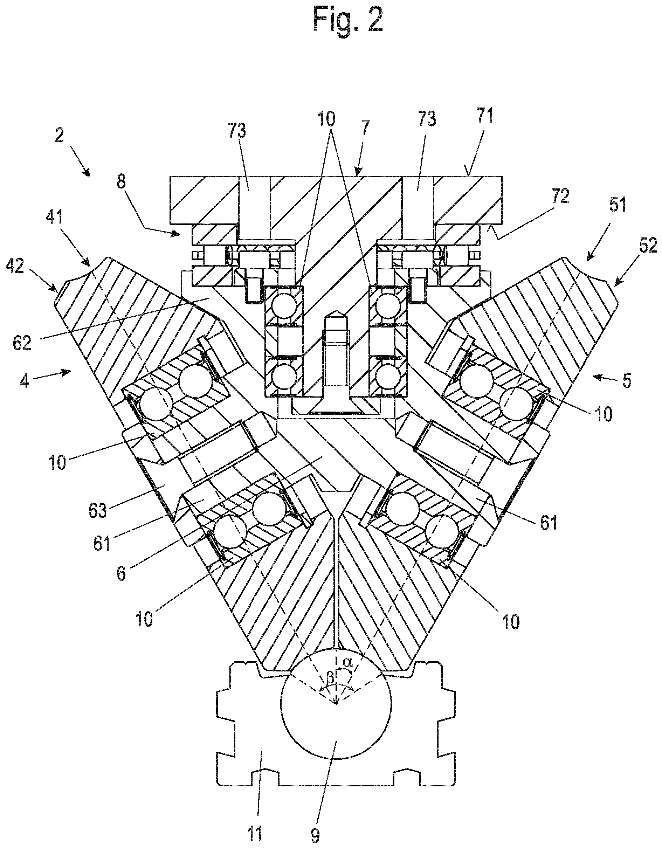

Der Schienenradsatz 2 weist, wie insbesondere in den Figuren 1 und 2 gezeigt ist, ein Lagergehäuse 6 mit zwei Achsaufnahmen 61 zur Drehlagerung zweier Laufräder 4, 5 auf.

Die drehbar am Lagergehäuse 6 gelagerten Laufräder 4, 5 weisen jeweils eine Schienenabrollfläche 41, 51 sowie eine jeweilige Bodenabrollfläche 42, 52 auf.

Die beiden Laufräder 4, 5 sind unabhängig voneinander auf der Lauffläche 91 der Schiene 9 oder auf einem ebenen Boden abrollbar.

Die Schienenabrollflächen 41, 51 der Laufräder 4, 5 sind an die Kontur der Lauffläche 91 der Schiene 9 angepasst geformt. Bei dem in den Figuren gezeigten Ausführungsbeispiel ist die Schiene 9 als Rundschiene ausgebildet, die in einem Schienenlager 11 eingebettet ist, das in einem Boden einer Fabrikhalle oder dergleichen einbaubar ist.

Dementsprechend sind die Schienenabrollflächen 41, 51 der beiden Laufräder 4, 5 im Querschnitt durch einen Durchmesser des jeweiligen Laufrads 4, 5 betrachtet als Kreisabschnitt geformt, wie es in Fig. 2 dargestell ist, die den Schienenradsatz 2 im auf die Schiene 9 aufgesetzten Zustand in einer solchen Querschnittsansicht zeigt.

Die beiden Laufräder 4, 5 sind dabei über Lager, bevorzugt Wälzlager 10 an den Achsaufnahmen 61 des Lagergehäuses 6 drehbar gelagert.

Wie in den Figuren 1 und 2 gut zu erkennen ist, sind die Laufräder 4, 5 winklig zueinander geneigt ausgerichtet am Lagergehäuse 6 angeordnet.

Dementsprechend sind die Achsaufnahmen 61 des Lagergehäuses 6 nicht waagerecht, sondern geneigt ausgebildet.

Der Neigungswinkel α der Laufräder 4, 5 beträgt dabei bevorzugt zwischen 20° und 40° zu einer vertikalen Achse des Schienenradsatzes 2. Die Laufräder 4, 5 sind insbesondere unter einem Neigungswinkel α von 30° zur Vertikalen geneigt ausgerichtet und dementsprechend unter einem Neigungswinkel von 60° zueinander.

Die Laufräder 4, 5 sind mit jeweiligen Schraubbolzen 63 in Aufnahmebohrungen der Achsaufnahmen 61 festgelegt.

Denkbar ist auch, die Laufräder 4, 5 parallel zueinander auszurichten.

Wie in Fig. 2 des Weiteren gezeigt ist, beträgt ein Umgriffswinkel β, der durch den Winkelabstand der äußeren Ränder der Schienenabrollflächen 41, 51 definiert ist, weniger oder genau 180°, bevorzugt in einem Bereich von 90° bis 130°, was ein Aufsetzen des Schienenradsatzes 2 auf die Lauffläche 91 der Schiene 9 ermöglicht.

Prinzipiell denkbar ist auch, die Schienenabrollflächen 41, 51 so zu formen, dass diese in einem Umgriffswinkel β von mehr als 180° die Schiene 9 umfassen, was mit einer verliergesicherten Halterung des Schienenradsatzes 2 einhergehen würde.

Die Bodenabrollflächen 42, 52 des jeweiligen Laufrads 4, 5 sind an einem Rand der Schienenabrollflächen 41, 51 angeformt.

Bei der hier gezeigten Ausführungsvariante des auf einer Rundschiene laufenden Schienenradsatzes 2 sind die Bodenabrollflächen 42, 52 am jeweiligen Außenrand der Schienenabrollflächen 41, 51 angeformt.

Die Bodenabrollflächen 42, 52 sind dabei im Querschnitt durch einen Durchmesser des jeweiligen Laufrades 4, 5, wie in Fig. 2 gezeigt, geradlinig oder leicht konvex, um eine hinreichende Aufstandsfläche auf einem ebenen Boden zu gewährleisten.

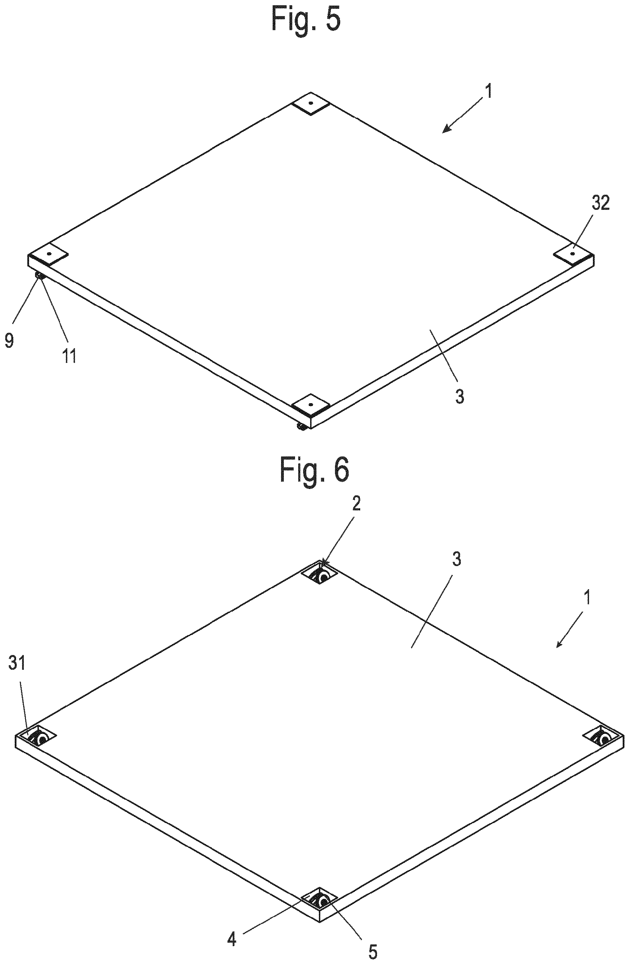

Zur Festlegung des Schienenradsatzes 2 an einem Fahrwagen 1, wie er beispielhaft in den Fig. 5 und 6 gezeigt ist, weist das Lagergehäuse 6 eine Tellerlageraufnahme 62 zur Aufnahme eines Tellers 7 auf, der an einem Fahrgestell 3 des Fahrwagens 1 festlegbar, insbesondere verschraubbar ist.

Zur Verschraubung des Tellers 7 sind dabei mehrere Bohrungen 73 im Teller 7 vorgesehen, die der Durchführung von Schraubbolzen dienen und mit denen der Teller 7 am Fahrgestell 3, beispielsweise an Befestigungsplatten 32 des Fahrgestells 3 anschraubbar sind.

Der Teller 7 ist, wie in Fig. 2 gezeigt, bevorzugt rotierbar über ein Drehlager 8 am Lagergehäuse 6 befestigt. Der Teller 7 ist dabei bevorzugt über Wälzlager 10 sowohl um eine vertikale Drehachse in der Tellerlageraufnahme 62 als auch über ein horizontal ausgerichtetes Drehlager am Lagergehäuse 6 gelagert.

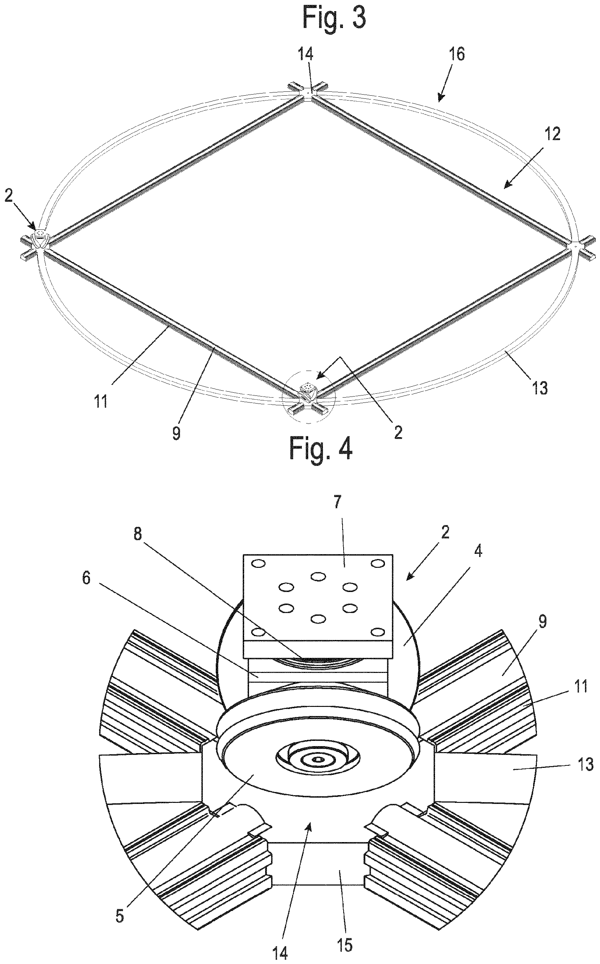

In Fig. 3 ist ein Ausschnitt eines Schienensystems 12 dargestellt, mit gleichwinklig zueinander laufenden Schienen 9, die sich an jeweiligen Kreuzungspunkten 14 treffen.

Im Bereich dieser Kreuzungspunkte 14 ist keine Schiene angeordnet, sondern eine ebene Platte 15.

Von diesem Kreuzungspunkt 14 mit der zentral angeordneten ebenen Platte 15 erstrecken sich sowohl Schienen 9 als auch eine Drehlaufbahn 13 mit ebener Lauffläche.

Die Drehlaufbahn 13 sowie die Abstände der Kreuzungspunkte 14 sind dabei an die Abmaße der Positionen der Schienenradsätze 2 am Fahrwagen 1 angepasst.

Bei der hier in den Figuren 3, 5 und 6 gezeigten Ausführungsvariante sind die Schienenradsätze 2 relativ zueinander als Quadrat angeordnet, so dass ein in Fig. 3 beispielhaft dargestelltes Drehkreuz lediglich vier solcher Kreuzungspunkte 14 benötigt.

Denkbar ist beispielsweise auch eine rechteckige Anordnung der Schienenradsätze 2 am Fahrwagen 1, für die vier oder mehr Kreuzungspunkte 14 in einem in Fig. 3 gezeigten Drehkreuz vorgesehen werden müssten.

Um eine Drehung des Fahrwagens 1 vornehmen zu können, müssen die Schienenradsätze 2, wie in Fig. 4 beispielhaft gezeigt, von der Schiene 9 herunter auf die ebene Platte 15 geschoben werden.

Auf dieser ebenen Platte 15 liegen nun die Bodenabrollflächen 42, 52 auf der Oberfläche der Platten 15 auf und können zur Durchführung der Drehbewegung in einfacher Weise um eine vertikale Zentralachse des jeweiligen Schienenradsatzes 2 gedreht werden, so dass die Ausrichtung des Schienenradsatzes 2 in Richtung der Drehlaufbahn 13 oder der quer verlaufenden Schiene 9 weist. Bei dieser Drehung der jeweiligen Schienenradsätze 2 drehen sich die Laufräder 4, 5 gegensinnig.

Anschließend kann der Fahrwagen 1 auf dem Drehkreuz 16 in einer Drehbewegung so weiterbewegt werden, dass die Schienenradsätze 2 von einem ersten Kreuzungspunkt 14 zu einem benachbarten zweiten Kreuzungspunkt 14 entlang der Drehlaufbahnen 13 verfahren werden.

Alternativ zum Drehen des Fahrwagens kann dieser durch Querstellen der Radsätze 2 am jeweiligen Kreuzungspunkt 14 auf der quer verlaufenden Schiene 9 weiterbewegt werden.

Nach Erreichen des nächsten Kreuzungspunktes 14 werden die Schienenradsätze 2 wieder um ihre vertikale Achse rotiert, bis sie parallel zu einer Schiene 9 ausgerichtet sind, so dass der Fahrwagen 1 anschließend entlang einer gedachten Verlängerung parallel zueinander laufender Schienen 9 in einer zur Anfangsrichtung verschiedenen Richtung bewegt werden kann.

Neben der als bevorzugtes Ausführungsbeispiel gezeigten Anordnung der zentrisch zu den Laufrädern 4, 5 drehbar gelagerten Teller 7 an dem Lagergehäuse 6 ist es auch denkbar, die Drehachse des Tellers 7 exzentrisch am Lagergehäuse 6 anzusetzen.

Ein weiterer Vorteil der winklig zueinander ausgerichteten Laufräder 4, 5 im Vergleich zu einem einteiligen, auf die Schiene aufgesetzten Laufrad besteht in der reduzierten Reibung zwischen den Laufrädern und der Schiene. Infolge der großen Krafteinwirkung, wie sie im Gebrauch solcher Fahrwagen 1 bei der Beförderung schwerer Gegenstände regelmäßig auftritt, bildet sich beim Abrollen von Laufrädern mit konkaver Schienenabrollfläche stets eine Druckellipse aus, die mit einem Versatz des Abrollradius innerhalb der Schienenabrollfläche einhergeht.

Da bei einem einteilig ausgeführten Laufrad die Krafteinleitung in vertikaler Richtung (Richtung der Gewichtskraft) erfolgt, bildet sich hier ein größerer Versatz des Abrollradius aus als bei einem Schienenradsatz mit zwei Laufrädern, insbesondere winklig zueinander ausgerichteten Laufrädern 4, 5, wie beispielhaft in Figur 2 gezeigt, da hier die Krafteinleitung winklig zur Lotrechten der Schiene 9 erfolgt.

Bei sich symmetrisch zum Krafteinleitungspunkt ausbildender Druckellipse ist der sich daraus ergebende Versatz des Abrollradius gegenüber einem Schienenrad mit einem senkrecht auf die Schiene aufgesetzten Laufrad deutlich reduziert.

Weiterer Vorteil der geneigten Laufräder 4, 5 besteht darin, dass gegenüber einer senkrechten Laufradanordnung größere Abrolldurchmesser bei gleicher Bauhöhe des Schienenradsatzes oder bei gleichem Abrolldurchmesser der Laufräder eine flachere, kompaktere Bauhöhe möglich sind bzw. ist, verglichen mit senkrecht auf einer Rundschiene stehenden Laufrädern.

### Bezugszeichenliste

- 1: Fahrwagen
- 2: Schienenradsatz
- 3: Fahrgestell
- 31: Radaufnahme
- 4: Laufrad
- 41: Schienenabrollfläche
- 42: Bodenabrollfläche
- 5: Laufrad
- 51: Schienenabrollfläche
- 52: Bodenabrollfläche
- 6: Lagergehäuse
- 61: Achsaufnahme
- 62: Tellerlageraufnahme
- 63: Schraubbolzen
- 7: Teller
- 71: Oberseite
- 72: Unterseite
- 73: Bohrung
- 8: Drehlager
- 9: Schiene
- 91: Lauffläche
- 10: Wälzlager
- 11: Schienenlager
- 12: Schienensystem
- 13: Drehlaufbahn
- 14: Kreuzungsbereich
- 15: Platte
- 16: Drehkreuz
- α: Neigungswinkel
- β: Umgriffswinkel

## Patentansprüche

1. Schienenradsatz (2) für einen auf einer Schiene (9) eines Schienensystems (12) verfahrbaren Fahrwagen (1), mit einer an die Kontur einer Lauffläche (91) der Schiene (9) angepasst geformten Schienenabrollfläche (41, 51) und einem Lagergehäuse (6) mit einer Radaufhängung zur Verbindung des Schienenradsatzes (2) mit dem Fahrwagen (1), wobei der Schienenradsatz (2) zwei drehbar am Lagergehäuse (6) gelagerte Laufräder (4, 5) mit einer jeweiligen Schienenabrollfläche (41, 51) und einer jeweiligen Bodenabrollfläche (42, 52) aufweist, die unabhängig voneinander an der Lauffläche (91) der Schiene (9) oder auf einem Boden abrollbar sind, **dadurch gekennzeichnet, dass** die Bodenabrollflächen (42, 52) des jeweiligen Laufrads (4, 5) an einem Rand der Schienenabrollflächen (41, 51) angeformt sind.

2. Schienenradsatz (2) nach Anspruch 1, **dadurch gekennzeichnet, dass** die Laufräder (4, 5) winklig zueinander geneigt ausgerichtet am Lagergehäuse (6) angeordnet sind.

3. Schienenradsatz (2) nach Anspruch 2, **dadurch gekennzeichnet, dass** die Laufräder (4, 5) jeweils unter einem Neigungswinkel (α) von 40° bis 80°, insbesondere unter einem Neigungswinkel (α) von 60° zueinander geneigt ausgerichtet sind.

4. Schienenradsatz (2) nach Anspruch 1, **dadurch gekennzeichnet, dass** die Laufräder (4, 5) parallel zueinander ausgerichtet sind.

5. Schienenradsatz (2) nach einem der vorstehenden Ansprüche, **dadurch gekennzeichnet, dass** die Schienenabrollflächen (41, 51) im Querschnitt durch einen Durchmesser des jeweiligen Laufrads (4, 5) betrachtet als Kreisabschnitt geformt sind.

6. Schienenradsatz (2) nach einem der vorstehenden Ansprüche, **dadurch gekennzeichnet, dass** ein von den beiden Schienenabrollflächen (41, 51) der Laufrollen (4, 5) umfasster Umgriffswinkel (β) im Querschnitt durch einen Durchmesser des jeweiligen Laufrads (4, 5) betrachtet weniger als 180° oder genau 180° beträgt.

7. Schienenradsatz (2) nach einem der vorstehenden Ansprüche 1 bis 5, **dadurch gekennzeichnet, dass** ein von den beiden Schienenabrollflächen (41, 51) der Laufrollen (4, 5) umfasster Umgriffswinkel (β) im Querschnitt durch einen Durchmesser des jeweiligen Laufrads (4, 5) betrachtet mehr als 180° beträgt.

8. Schienenradsatz (2) nach einem der vorstehenden Ansprüche, **dadurch gekennzeichnet, dass** die Bodenabrollflächen (42, 52) im Querschnitt durch einen Durchmesser des jeweiligen Laufrads (4, 5) betrachtet geradlinig ausgebildet sind.

9. Schienenradsatz (2) nach einem der vorstehenden Ansprüche, **dadurch gekennzeichnet, dass** an dem Lagergehäuse (6) ein Teller (7) zur Verbindung mit dem Fahrwagen (1) angeordnet ist.

10. Schienenradsatz (2) nach Anspruch 9, **dadurch gekennzeichnet, dass** der Teller (7) rotierbar am Lagergehäuse (6) befestigt ist.

11. Fahrwagen (1) zur Beförderung von Gegenständen auf einem Schienensystem (12) mit einem Fahrgestell (3) und an dem Fahrgestell (3) befestigten Schienenradsätzen (2), **dadurch gekennzeichnet, dass** die Schienenradsätze (2) gemäß einem der vorstehenden Ansprüche ausgebildet sind.

## Claims

1. Rail wheel set (2) for a car (1) movable on a rail (9) of a rail system (12), comprising a rail rolling surface (41, 51) shaped to match the contour of a running surface (91) of the rail (9) and a bearing housing (6) having a wheel suspension for connecting the rail wheel set (2) to the car (1), wherein the rail wheel set (2) comprises two running wheels (4, 5) rotatably mounted on the bearing housing (6) and having a respective rail rolling surface (41, 51) and a respective ground rolling surface (42, 52), which can roll independently of one another on the running surface (91) of the rail (9) or on a floor, **characterized in that** the straight-line ground rolling surfaces (42, 52) of the respective running wheel (4, 5), are integrally formed on one edge of the rail rolling surfaces (41, 51).

2. Rail wheel set (2) according to claim 1, **characterized in that** the running wheels (4, 5) are arranged on the bearing housing (6) oriented inclined at an angle to one another.

3. Rail wheelset (2) according to claim 2, **characterized in that** the running wheels (4, 5) are each oriented inclined to one another at an angle of inclination (α) of 40° to 80°, in particular at an angle of inclination (α) of 60°.

4. Rail wheel set (2) according to claim 1, **characterized in that** the running wheels (4, 5) are oriented parallel to one another.

5. Rail wheel set (2) according to one of the preceding claims, **characterized in that** the rail rolling surfaces (41, 51) are formed as a circular section in cross-section through a diameter of the respective running wheel (4, 5).

6. Rail wheel set (2) according to one of the preceding claims, **characterized in that** a wrap angle (ß) encompassed by the two rail rolling surfaces (41, 51) of the running wheels (4, 5) is less than 180° or exactly 180° when viewed in cross-section through a diameter of the respective running wheel (4, 5).

7. Rail wheel set (2) according to one of the preceding claims 1 to 5, **characterized in that** a wrap angle (ß) encompassed by the two rail rolling surfaces (41, 51) of the running wheels (4, 5) is more than 180° when viewed in cross-section through a diameter of the respective running wheel (4, 5).

8. Rail wheel set (2) according to one of the preceding claims, **characterized in that** the straight-line ground rolling surfaces (42, 52), as viewed in cross-section through a diameter of the respective running wheel (4, 5), are formed in a straight line.

9. Rail wheel set (2) according to one of the preceding claims, **characterized in that** a plate (7) for connection to the car (1) is arranged on the bearing housing (6).

10. Rail wheel set (2) according to claim 9, **characterized in that** the plate (7) is rotatably attached to the bearing housing (6).

11. Car (1) for transporting objects on a rail system (12), comprising a chassis (3) and rail wheel sets (2) attached to the chassis (3), **characterized in that** the rail wheel sets (2) are designed according to one of the preceding claims.

## Revendications

1. Essieu monté sur rails (2) pour un chariot (1) capable de circuler sur un rail (9) d'un système de rails (12), avec une surface de roulement sur rail (41, 51) de forme adaptée au contour d'une surface de roulement (91) du rail (9) et avec une boîte d'essieu (6) munie d'une suspension de roue pour relier l'essieu monté sur rails (2) au chariot (1), lequel essieu monté sur rails (2) présente deux roues (4, 5) supportées avec possibilité de rotation sur la boîte d'essieu (6) et comportant chacune une surface de roulement sur rail (41, 51) et une surface de roulement au sol (42, 52) qui peuvent rouler indépendamment l'une de l'autre sur la surface de roulement (91) du rail (9) ou sur le sol, **caractérisé en ce que** les surfaces de roulement au sol (42, 52) de chaque roue (4, 5) sont formées sur un bord des surfaces de roulement sur rail (41, 51).

2. Essieu monté sur rails (2) selon la revendication 1, **caractérisé en ce que** les roues (4, 5) sont disposées sur la boîte d'essieu (6) en formant un angle l'une par rapport à l'autre.

3. Essieu monté sur rails (2) selon la revendication 2, **caractérisé en ce que** les roues (4, 5) sont orientées l'une par rapport à l'autre selon un angle d'inclinaison (α) de 40° à 80°, en particulier selon un angle d'inclinaison (α) de 60°.

4. Essieu monté sur rails (2) selon la revendication 1, **caractérisé en ce que** les roues (4, 5) sont orientées parallèlement l'une à l'autre.

5. Essieu monté sur rails (2) selon l'une des revendications précédentes, **caractérisé en ce que** les surfaces de roulement sur rail (41, 51), vues en coupe transversale en travers d'un diamètre de la roue (4, 5), sont conformées comme un segment de cercle.

6. Essieu monté sur rails (2) selon l'une des revendications précédentes, caractérisé en qu'un angle d'enveloppe (β) renfermé par les deux surfaces de roulement sur rail (41, 51) des roues (4, 5), vu en coupe transversale en travers d'un diamètre de la roue (4, 5), est inférieur à 180° ou exactement de 180°.

7. Essieu monté sur rails (2) selon l'une des revendications 1 à 5, **caractérisé en ce qu'**un angle d'enveloppe (β) renfermé par les deux surfaces de roulement sur rail (41, 51) des roues (4, 5), vu en coupe transversale en travers d'un diamètre de la roue (4, 5), est supérieur à 180°.

8. Essieu monté sur rails (2) selon l'une des revendications précédentes, **caractérisé en ce que** les surfaces de roulement au sol (42, 52), vues en coupe transversale en travers d'un diamètre de la roue (4, 5), ont une forme rectiligne.

9. Essieu monté sur rails (2) selon l'une des revendications précédentes, **caractérisé en ce qu'**un disque (7) destiné à la liaison avec le chariot (1) est disposé sur la boîte d'essieu (6).

10. Essieu monté sur rails (2) selon la revendication 9, **caractérisé en ce que** le disque (7) est fixé avec possibilité de rotation sur la boîte d'essieu (6).

11. Chariot (1) pour le transport d'objets sur un système de rails (12) avec un châssis (3) et des essieux montés sur rail (2) fixés au châssis (3), **caractérisé en ce que** les essieux montés sur rails (2) sont conformés selon l'une des revendications précédentes.
